# EUROPEAN PATENT SPECIFICATION

(11) **EP 0 568 617 B1**
(45) Date of publication and mention of the grant of the patent: **30.08.1995**
(21) Application number: 92904657.1
(22) Date of filing: 02.01.1992
(51) Int. Cl.: F16K 41/02

(54) **HIGH TEMPERATURE PERFLUOROELASTOMERE VALVE PACKING**
HOCHTEMPERATURPACKUNG AUS PERFLUORELASTOMER FÜR VENTILE
GARNITURE D'ETANCHEITE EN PERFLUOROELASTOMERE RESISTANT AUX TEMPERATURES ELEVEES POUR ROBINET

(30) Priority: 24.01.1991 US 649541
(43) Date of publication of application: 10.11.1993
(73) Proprietor: E.I. DU PONT DE NEMOURS AND COMPANY, Wilmington Delaware 19898 (US)
(72) Inventor: PITTMAN, Gary, Mack, Pearland, TX 77581 (US); SENIOR, Kenneth, Alan, Wilmington, DE 19808 (US); STRUNK, John, Neal, Houston, TX 77070 (US); THONDUKOLAM, Krishnan, Ramalingam, Newark, DE 19711 (US)
(74) Representative: Abitz, Walter, Dr.-Ing.
(86) International application number: US9200006
(87) International publication number: WO9213224

(56) References cited:
- EP-A- 0 308 390
- DE-A- 2 364 132
- GB-A- 2 174 176
- US-A- 4 414 356

## Description

### Background of the Invention

Valves used in industrial environments often have rigorous performance standards. In the past, packings of polytetrafluoroethylene and other fluoropolymers have been used which were considered to seal valves satisfactorily. While packings were previously considered satisfactory with leakages of 10,000 ppm, such levels have now been found to be unacceptable for many applications. Desired emission levels for many industrial applications are below 500 ppm, and levels of less than 10 ppm for particularly toxic and carcinogenic materials would be desirable, particularly for those materials for which emission or handling standards have been established by various governmental agencies.

DE-A-2,364,132 discloses a valve packing comprising at least three rings including a male adapter, a female adapter and at least one chevron seal ring positioned between the male adapter and the female adapter. The male adapter and the female adapter are formed from a fiber filled PTFE and the seal ring is formed from carbon filled PTFE.

### Summary of the Invention

The invention as claimed in claim 1 solves the problem of how to provide a valve packing having particularly low emission levels in a cost-effective manner.

### Brief Description of the Drawings

Figure 1 is a cross-sectional view of a valve packing of the present invention.

Figure 2 is a perspective view of a preferred valve packing of the present invention.

### Detailed Description of the Invention

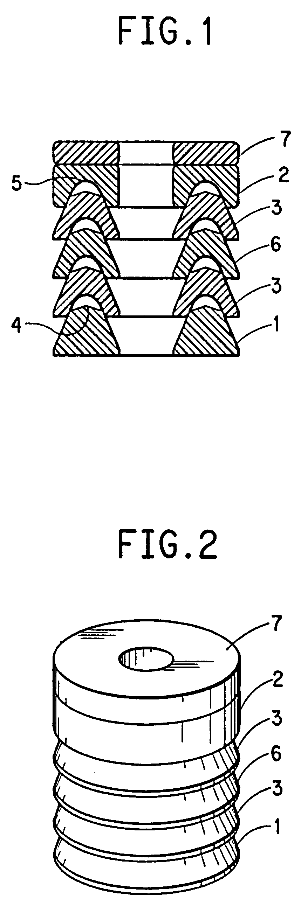

The valve packings of the present invention are composed of a plurality of individual rings, as can be seen in cross-sectional illustration in Figures 1 and 2. There, male adapter 1 is at the upstream end of the packing, and female adapter 2 is at the atmospheric, or downstream end of the packing. Perfluoroelastomeric seal rings 3 are in a chevron or "V" configuration, fitting with ridge 4 of the male adapter and groove 5 of the female adapter.

When two or more seal rings are used in the packings of the present invention, the seal rings are separated by spacer rings 6. These spacer or backup rings are prepared from the same materials as the male and female adapters.

In accordance with the present invention,the male and female adapters and the spacer rings are prepared from fiber-filled non-elastomeric high temperature polymer. Fluoropolymers are preferably used for this component, and can include polytetrafluoroethylenes, such as those commercially available from the Du Pont Company as Teflon® PTFE fluoropolymer resins; melt-processable copolymers of tetrafluoroethylene and hexafluoropropylene such as those commercially available from the Du Pont Company as Teflon® FEP fluoropolymer; and clear, thermoplastic fluoropolymers such as those tetrafluoroethylene/fluorovinylether copolymers commercially available from the Du Pont Company as Teflon® PFA. Still other fluoropolymers which can be used effectively in the present invention are those modified copolymers of ethylene and tetrafluoroethylene commercially available from the Du Pont Company as Tefzel® fluoropolymers.

The fluoropolymer used for the spacers and the adapters, is intimately admixed with about from 1 to 50 weight % fibrous filler, and preferably at least about 10 weight % fibrous filler, and especially at least about 20 weight % of the fibrous filler. The weight % is based on the total weight of fluoropolymer and filler.

Fillers which can be beneficially used include glass, graphite and carbon fiber, of which carbon fiber is preferred. Such materials, with about 20 weight % of admixed carbon fiber filler, are commercially available from the Du Pont Company as Corrosion Resistant Composite Systems. Representative of such materials and their preparation are those described in Mansure, U.S. Patent 4,163,742 and Michel, U.S Patent 4,414,356, both of which are hereby incorporated by reference. These materials can be prepared by the process described in Michel, U.S Patent 4,422,992, which is also hereby incorporated by reference.

The filled fluoropolymer resins exhibit a particularly desirable combination of physical and mechanical properties. The combination of fluoropolymer resin and fiber filler, and especially carbon fiber filler, not only resists particularly high temperatures in normal operating environments, but, in the event of fire, the fiber filler and the resin matrix provide a sealing function that exceeds the capability of the resin alone.

In a preferred embodiment of the valve packings of the present invention, a ring of flexible graphite is included on the atmospheric side of the female adapter, shown as element 7 in Figures 1 and 2. Flexible graphites which can be used include that commercially available from Union Carbide Corporation as Graphoil®. This flexible graphite provides the further improvement of a sealing effect when the packings are exposed to exceptionally high temperatures, as in the case of fire. The flexible graphite, in conjuction with the fibers from the composite, forms a seal between the stem and the valve body, even above temperatures at which the seal element itself is subsequently destroyed.

Perfluoroelastomers which can be used in the preparation of the seal rings of the present invention include, for example, those perfluoroelastomers described in Breazeale, U.S. Patent 4,281,092. Perfluoroelastomers of tetrafluoroethylene and perfluoro (methyl vinyl ether) are commercially available from the Din Font Company as Kalrez® perfluoroelastomers. These perfluoroelastomers generally have a termonomer to facilitate curing, such as CF₂=CF-O-CF₂-CF(CF₃)-O-C₆F₅, CH₂=CH-CF₂-CF₂Br, CF₂=CF-O-CF₂CF(CF₃)OCF₂CF₂CN, and CF₂=CH₂.

Other perfluoroelastomers which can be used are those copolymers of tetrafluoroethylene and a mixture of perfluoromethylvinyl ether and higher molecular vinyl ether, and having a cure site monomer derived from perfluoro alkyl diiodide. Those copolymers are commercially available from Daikin Kogyo Co., Ltd. as Perfluor® perfluoroelastomer, and marketed by Green, Tweed as Chemraz® perfluoroelastomer. Still another perfluoroelastomer which can be used in the present invention is that commercially available from NOK-Freudenberg as Simraz perfluoroelastomer.

For those applications in which temperatures greater than about 400°F will be encountered, Kalrez® perfluoroelastomers exhibit exceptional stability, and better long term performance than other commercial perfluoroelastomers. These materials are accordingly preferred.

The configuration of the present packings will, of course, vary with the particular stem which is to be sealed and the associated cavity. Typically, the valve stems to be sealed have an outer diameter of 0.64 to 3.81 cm (1/4 to 1 1/2 inch), which corresponds to the inner diameter of the packing. The diameter of the cavity in which the stem is located, corresponding to the outer diameter of the packing, is generally about from 1 1/2 to 2 times the diameter of the stem.

The packings of the present invention provide a marked improvement in sealing performance over standard fluoropolymer or flexible graphite packings that have heretofore been used. This is particularly advantageous in industrial chemical equipment, where the emissions of toxic or corrosive fluids such as benzene, butadiene and other carcinogenic or toxic substances can be reduced to less than 500 ppm. In many cases, emissions can be reduced to less than 10 ppm or substantially eliminated.

The present invention is further illustrated by the following specific examples, in which parts and percentages are by weight unless otherwise indicated.

### Example 1

Valve packings were assembled substantially as illustrated in Figure 1, to fit valves having a 0.97 cm (3/8-inch) stem. In each packing, the male and female adapters, as well as the spacer, were prepared from Teflon® fluoropolymer admixed with 20 weight % carbon-fiber, and available from the Du Pont company as CRCC components, Teflon® PFA fluoropolymer. The two chevron seal rings were prepared from Kalrez® 3018 perfluoroelastomer compound. The outer diameter of the packing components was 2.22 cm (0.873 inch). The spacer and the perfluoroelastomer seals were each 0.70 cm (0.274 inch) thick, the male adapter was 0.47 cm (0.184 inch) thick, and the female adapter was 0.61 cm (0.242 inch) thick.

If the packings were assembled in valves controlling benzene and butadiene in systems in which the pressures are up to about 1.36 MPa. (200 psi) and the temperatures are up to 260°C (500°F), emission levels over an 8 week period would average less than 20 parts per million for either benzene or butadiene. In addition, the packings will exhibit low creep and cold flow, and low compressibility.

### Example 2

A valve packing was assembled substantially as in Example 1, except that a further ring of Graphoil® flexible graphite, having a thickness of 0.64 cm (0.250 inch), was included on top of the female adapter. The valve packing was assembled in a valve, and tested in a fire certification test.

The pressure of the line controlled by the valve during the test averaged 1.36 MPa. (200 psi), with a minimum pressure of 1.33 MPa. (195 psi) and a maximum pressure of 151 MPa. (222 psi). The fluid in the line was hot water and steam.

The valve was exposed to three natural gas burner flames in a test chamber for a total test period of 30 minutes. The test elevated the temperature of the valve body to 674°C (1245°F) within 12 minutes, 50 seconds, and to 777°C (1430°F) at the end of the test. The test elevated the temperature of the packing to 649°C (1200°F) within 12 minutes, 50 seconds, and to 751°C (1383°F) at the end of the test.

The valve was tested for leaks after the flame test, at a low pressure of about 0.20 MPa. (30 psig). The valve exhibited a leakage of 3.4 ml/min. American Petroleum Institute (API) #607 Fire Test permits 20 ml/min.

The valve was tested for leaks after the flame test, at a high pressure of about 1.36 MPa. (200 psig). The valve exhibited a leakage of 8.7 ml/min. API standards permit 200 ml/min.

No external leakage was noted during either the course of the test or cool down after the test. API standards permit 100 ml/min.

## Claims

1. A valve packing of alternating layers, the packing being composed of a plurality of individual rings including
a) a male adapter (1),
b) a female adapter (2),
c) at least two chevron seal rings (3) positioned between the male adapter and the female adapter (1,2),
d) at least one chevron spacer ring (6) positioned between each pair of the chevron seal rings (3);
the chevron seal rings (3) being formed from a perfluoroelastomer, and
the male and female adapters (1,2) and each spacer ring (6) being formed from a substantially nonelastomeric high temperature polymer having about from 1 to 50 weight % of a fibrous filler intimately admixed therewith.

2. A valve packing of Claim 1 wherein the fibrous filler is selected from carbon, graphite and glass.

3. A valve packing of Claim 2 wherein the fibrous filler comprises at least about 10 weight % of the non-elastomeric high temperature polymer.

4. A valve packing of Claim 3 wherein the fibrous filler comprises at least about 20 weight % of the non-elastomeric high temperature polymer.

5. A valve packing of Claim 1 wherein the high temperature polymer consists essentially of fluoropolymer.

6. A valve packing of Claim 5 wherein the fluoropolymer consists essentially of tetrafluoroethylene copolymer.

7. A valve packing of Claim 1 further comprising a ring (7) of flexible graphite on the atmospheric side of the female adapter.

## Patentansprüche

1. Ventildichtung aus abwechselnden Lagen, wobei die Dichtung aus mehreren einzelnen Ringen besteht, enthaltend:
a) ein eindringendes Paßtstück (1),
b) ein aufnehmendes Paßstück (2),
c) wenigstens zwei V-Dichtringe (3) zwischen dem eindringenden und dem aufnehmenden Paßstück (1, 2),
d) wenigstens einen V-Abstandsring (6) zwischen jedem Paar der V-Dichtringe (3),
wobei die V-Dichtringe aus einem Perfluorelastomer hergestellt sind, und
die eindringenden und die aufnehmenden Paßstücke (1, 2) und jeder Abstandsring (6) aus einem im wesentlichen nichtelastomeren Hochtemperaturpolymer mit ungefähr 1 bis 50 Gew.-% innig beigemischtem faserförmigem Füller hergestellt sind.

2. Ventildichtung nach Anspruch 1, wobei der faserförmige Füller aus Kohlenstoff, Graphit und Glas ausgewählt ist.

3. Ventildichtung nach Anspruch 2, wobei der faserförmige Füller wenigstens ungefähr 10 Gew.-% des nichtelastomeren Hochtemperaturpolymers enthält.

4. Ventildichtung nach Anspruch 3, wobei der faserförmige Füller wenigstens ungefähr 20 Gew.-% des nichtelastomeren Hochtemperaturpolymers enthält.

5. Ventildichtung nach Anspruch 1, wobei das Hochtemperaturpolymer im wesentlichen aus Fluorpolymer besteht.

6. Ventildichtung nach Anspruch 5, wobei das Fluorpolymer im wesentlichen aus Tetrafluorethylencopolymer besteht.

7. Ventildichtung nach Anspruch 1, ferner enthaltend einen Ring aus flexiblem Graphit auf der Atmosphärenseite des aufnehmenden Paßstücks.

## Revendications

1. Garniture de robinet à couches alternées, ladite garniture étant composée de plusieurs bagues séparées comprenant :
a) un adaptateur mâle (1),
b) un adaptateur femelle (2),
c) au moins deux bagues d'étanchéité en forme de chevron (3) placées entre l'adaptateur mâle (1) et l'adaptateur femelle (2),
d) au moins une bague d'écartement en forme de chevron (6) placée entre chaque paire de bagues d'étanchéité en forme de chevron (3);
les bagues d'étanchéité en forme de chevron (3) étant constituées d'un perfluoroélastomère et
les adaptateurs mâle et femelle (1, 2) et chaque bague d'écartement (6) étant constitués d'un polymère essentiellement non élastomère pour haute température et contenant d'environ l à 50% en poids d'une charge fibreuse qui lui est intimement mélangée.

2. Garniture de robinet selon la revendication 1, dans laquelle la charge fibreuse est choisie dans le groupe formé du carbone, du graphite et du verre.

3. Garniture de robinet selon la revendication 2, dans laquelle la charge fibreuse contient au moins environ 10% en poids du polymère non élastomère pour haute température.

4. Garniture de robinet selon la revendication 3, dans laquelle la charge fibreuse contient au moins environ 20% en poids du polymère non élastomère pour haute température.

5. Garniture de robinet selon la revendication 1, dans laquelle le polymère pour haute température est constitué essentiellement de fluoropolymère.

6. Garniture de robinet selon la revendication 5, dans laquelle le fluoropolymère est constitué essentiellement de copolymère de tétrafluoroéthylène.

7. Garniture de robinet selon la revendication 1, comprenant en outre une bague (7) en graphite flexible sur le côté tourné vers l'atmosphère de l'adaptateur femelle.
